# EUROPEAN PATENT SPECIFICATION

(11) **EP 1 607 288 B1**
(45) Date of publication and mention of the grant of the patent: **15.08.2007**
(21) Application number: 04013910.7
(22) Date of filing: 14.06.2004
(51) Int. Cl.: B60R 22/46, B60R 22/34

(54) **Safety apparatus**
Sicherheitsvorrichtung
Dispositif de sécurité

(43) Date of publication of application: 21.12.2005
(73) Proprietor: Chris Cintos de Seguranca Ltda., Sao Paulo (BR)
(72) Inventor: Marshall, Steve, Low Seaton Cumbria CA14 1PP (GB); Jungbauer, Peter, 86556 Unterbernbach (DE); Adomeit, Julius, 14195 Berlin (DE); Adomeit, Heinz-Dieter, 10623 Berlin (DE)
(74) Representative: Manitz, Finsterwald & Partner GbR

(56) References cited:
- EP-A- 1 114 760
- US-A- 5 820 058
- US-A- 6 012 667

## Description

The invention relates to a safety apparatus, in particular for motor vehicles, having the features of the preamble of claim 1 and wellknown in the art of such safety devices.

In the normal operation such belt systems must ensure a problem-free spool rotation in both directions in order to make wearing of the belt comfortable for the user. Various functional principles are known on which existing belt systems are based. The present application relates to systems with a "floating" spool, i.e. with the spool movable between a blocked position and a released position. In the blocked position a rotation of the spool in the belt let-out direction is not possible, i.e. when the spool is in a blocked position the belt system fulfils its actual safety function: A vehicle occupant falling into the belt during an accident is held back by the blocked reel, i.e. by the reel which is blocked in the unwinding direction. In contrast, in the released position the spool can be rotated in both directions.

Belt retention systems which are based on the "floating spool" principle have been known for a long time. The mounting of the floating spool can in this connection take place in different ways and by different means. The spool can for example be freely movable within a defined range, for example be guided along a predetermined track in coercive guides formed for example as cam tracks or can be pivotally mounted. The movement of the spool out of the released position into the blocked position takes place via the belt itself, whereas the movement of the spool back into the released position takes place as a result of its own weight or with the aid of resetting devices operating for example with springs.

Known safety belt systems with floating spools operate reliably and satisfactorily from every point of view and are used in large numbers in vehicle construction, in particular as a result of their simple layout and their robustness. The "floating spool" systems are able to satisfy without problem the demands placed on them in accordance with which the spool must adopt the blocked position from a specific vehicle acceleration onwards and also from a specific belt acceleration onwards.

Safety belt systems are increasingly being provided with further functions. Such additional functions are in particular a pretensioning function and a load or force limiting function.

Pretensioners serve to drive the reel in the belt take-up direction within a short period of time of for example 10 ms following the establishment of an accident situation in order to remove the so-called belt slackness, i.e. to tension the belt, so that the safety belt can ideally satisfy its retention function when the vehicle occupant falls into the belt as a result of inertia following belt tensioning.

Load limiting devices, which are in particular known in the form of torsion bars connected to the spool, serve to permit a defined spool rotation in the belt let-out direction when the spool is actually blocked in order to reduce the peak loads which act on the vehicle occupant when falling into the belt as a result of inertia.

As a result of the defined belt let-out the load limiting devices also permit a certain forward movement of the vehicle occupant which is why a combination of belt tensioning and load limiting has a particular importance in modern safety belt systems: An ideal load limiting is first made possible at all by the possibility of pretensioning the belt.

The provision of belt systems operating in accordance with the floating spool principle with pretensioners and load limiting devices has hitherto been refrained from, because it is regarded as practically impossible to handle a floating spool in this way in a reliable manner and in a manner which satisfies all safety requirements.

The object of the invention is to further develop a safety apparatus of the initially named kind, i.e. a belt system based on the "floating spool" principle, in such a way that additional functions, in particular a pretensioning function and/or a load limiting function, can be integrated without impairing the ability of the apparatus to operate satisfactorily.

The solution of this object takes place in accordance with the invention by the features of claim 1 and in particular in that the safety apparatus has a load limiting device which, in the blocked position, permits a defined rotation of the spool, wherein the load limiting device includes two load limiting sections spaced apart along the spool axis via which a spool reel carrying the belt winding is in each case coupled to a blocking portion.

According to the invention the load limiting device does not cooperate with the spool but rather the spool reel is coupled to a blocking portion at a plurality of axially spaced apart positions, in each case via a load limiting section. The danger of tilting of the floating spool which exists with only one ended loading can be reliably avoided by the invention.

Through the invention a belt system operating in accordance with the "floating spool" principle is provided for the first time with a load limiting device which is made possible by distributing the load limiting to a plurality of coupling positions. Moreover, this distribution of the load limiting leads to an advantageous distribution of the load acting on the spool reel, on the blocking portions and also on the load limiting device itself.

With two load limiting sections spaced apart along the spool axis the loading at each load limiting section is reduced by 50 % in comparison to a one-sided load limiting. Expressed simply, the axial extent of the spool is exploited by the invention not only to enable the use of a load limiting device per se but rather also to distribute the forces which act during load limiting along the spool axis and in this manner to avoid high local mechanical loadings. A further advantage of the force distribution lies in the fact that the individual components can be dimensioned to be less robust.

Further preferred embodiments of the invention are also set forth in the dependent claims, in the description and in the drawings.

The spool reel is preferably exclusively able to be blocked via the load limiting sections. When the spool is in the blocked position, i.e. when a predetermined vehicle acceleration is exceeded, or when a predetermined belt acceleration is exceeded, the spool reel is as a consequence exclusively prevented from rotating in the belt let-out direction via the load limiting sections which are coupled to the blocked blocking portions. As soon as the tension in the belt exceeds a predetermined threshold value in the blocked position the load limiting sections are effective in the sense that a rotation of the spool relative to the blocking portions is permitted. The load limiting sections are thus formed so that they reliably suppress a rotation of the spool reel in the belt let-out direction as long as the belt tension lies below the predetermined threshold value.

Furthermore, provision is made in accordance with the invention for the spool reel to be permanently coupled to the load limiting sections. In addition it is preferred for the load limiting sections to be each permanently coupled to the blocking portion. In this way no complicated engagement mechanisms are required for the load limiting function.

In accordance with a further preferred embodiment of the invention the spool is made symmetrical with respect to a plane of symmetry extending perpendicular to the spool axis, at least with regard to the load limiting function. The load limiting sections are in this arrangement spaced from the plane of symmetry of the spool by the same amount.

Furthermore it is proposed that the load limiting sections are each coupled to the blocking portion axially outside of the spool reel.

The blocking portions are preferably each formed as a gear wheel which preferably has an external toothed arrangement which only blocks in the belt let-out direction.

In a special preferred practical embodiment of the invention the load limiting sections each include at least one material section which is movable in the blocked position by means of the spool reel relative to the blocking portion. The material section is preferably movable around the spool axis.

Otherwise than in the known load limiting devices which operate with torsion bars, the spool reel which attempts to rotate in the belt let-out direction as a result of the belt tension is not exploited for the twisting of a bar extending in the axial direction but rather to move a separate material section relative to the blocking portion around the spool axis. The material section is preferably of strip-like shape.

Furthermore, provision is preferably made for a profile or labyrinth to be provided which imposes at least one change in direction on the material section moved by the spool reel. By pulling the material section through a profile or labyrinth by means of the spool reel, not only do friction forces oppose the rotary movement of the spool reel but rather deformation work must also be continuously exerted on the material section. Through a corresponding design of the profile or labyrinth and also of the material section the load limiting effect can be set as desired in accordance with the invention. In particular, it is possible, by appropriate tuning of the load limiting device, to preset the number of complete revolutions of the spool reel which are to be permitted by the load limiting device of the invention during an accident, when the relevant vehicle occupant falls as a result of inertia into the belt.

The profile or labyrinth is preferably formed at the blocking portion.

Furthermore it is proposed that the material section can be drawn off from the blocking portion by means of the spool reel. The material section can in particular be simultaneously unwound from the blocking portion and wound onto the spool reel or onto a spool wheel rotationally fixedly connected to the spool reel. In this manner, with a minimum space requirement, maximum path lengths for the material section can be realized, whereby even load limiting functions with up to ten or more complete rotations of the spool reel relative to the blocking portions are possible without problem.

Drum sections of the blocking portion and of the spool reel or of the spool wheel are preferably arranged concentric to one another for the unwinding and winding up of the material section. In addition it is proposed that the blocking portion and the spool reel or the spool wheel are plugged into one another in the axial direction.

In accordance with a further particularly preferred practical design of the invention the load limiting device includes at least one torsion bar which is respectively coupled at axially spaced apart blocking positions to the blocking portions and to the spool reel between the blocking positions.

In accordance with the invention known torsion bar arrangements are modified to the extent that a plurality of axially spaced apart load limiting sections are provided. The torsion bar is consequently twisted at a plurality of regions arranged axially in series or following one another, namely in each case between the coupling point to the spool reel and the coupling points to the blocking portions.

Through the provision of a plurality of torsional regions which each only have to take up a part of the total load that is acting, the diameter of a torsion bar can be selected to be substantially smaller in comparison to customary arrangements, which opens up new design possibilities and in particular enables a compact manner of construction.

In accordance with a further preferred embodiment of the invention provision is made for the torsion bar to extent fully through the spool reel. The coupling points to the blocking portions can in particular be provided axially outside of the spool reel. The total length of the torsion bar can in this way be increased relative to customary arrangements, whereby new constructional possibilities are again opened up.

The torsion bar preferably has a coupling gear wheel for the coupling to the spool reel.

In addition to the load limiting device the belt system in accordance with the invention can have a pretensioner with which the spool can be driven in the winding up direction. In particular provision can be made for the pretensioner and the load limiting device to cooperate with the spool independently of one another.

The invention will be described in the following by way of example and with reference to the drawings in which are shown:
- Figs. 1a - 1f: various views of a first embodiment of a safety apparatus in accordance with the invention and
- Figs. 2a - 2e: various views of a second embodiment of a safety device in accordance with the invention.

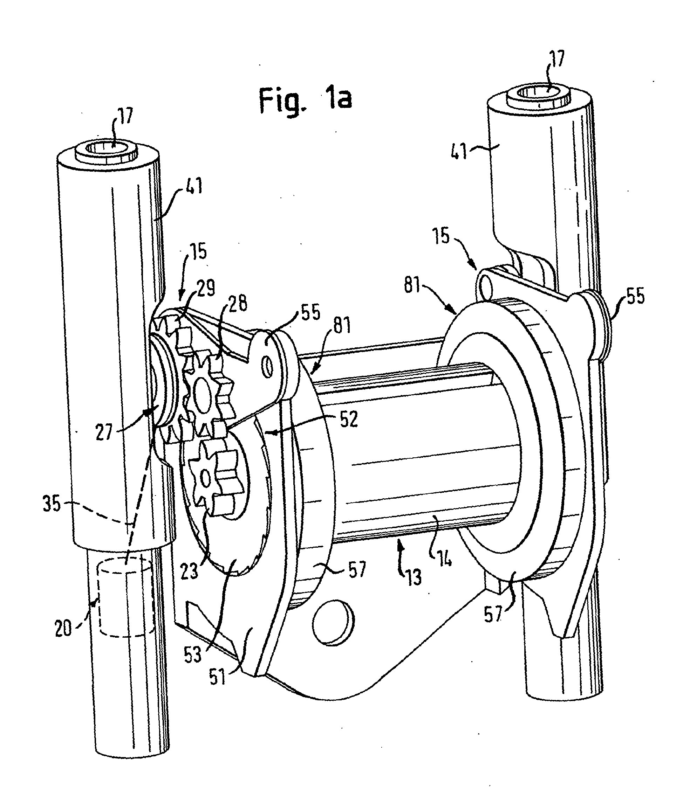

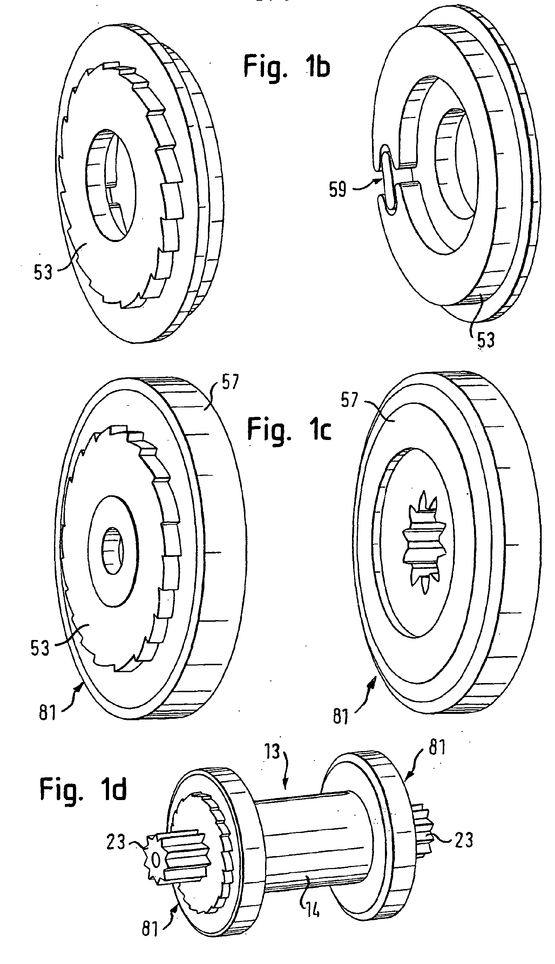

The safety apparatus in accordance with the invention shown in Figs. 1a - 1f without the housing cover includes a substantially U-shaped frame 51 on which a spool 13 for a non-illustrated safety belt is floatingly mounted, the safety belt being wound onto a spool reel 14. The spool 13 includes a through-going drive pinion 23 which forms the spool axis and with which a blocking gear 53 is rotationally fixedly connected in each axial end region.

The blocking gear 53 is provided with external saw-tooth like teeth which block in the belt let-out direction and which cooperate with corresponding mating teeth 52 of the frame 51 when the spool 13 is located in a blocking position. The mating teeth 52 bound an aperture which differs from a circular shape only in an upper peripheral region, the aperture being formed in the relevant U-limb of the frame 51 for the blocking gear 53.

The pretensioner 15 for the spool 13, which is floatingly mounted in this manner at the frame 51 in its apertures, includes two separate drive trains of the same design which each include a gas generator 17 arranged in a cylinder 41, a piston 20 which is simply indicated in broken lines within the cylinder 41 and also a gear arrangement 28, 29 which is mounted on a pivotal lever 55 which is pivotable about an axis extending parallel to the spool axis.

The gear wheel 29 is a component of a cable drum 27 onto which a cable 35 is rolled, the cable being partly shown in broken lines and being secured at one end to the piston 20 within the cylinder 41.

After triggering of the gas generator 17 the piston 20 moves downwardly in the cylinder 41. Through this, the lever 55 is first moved downwardly via the cable 35 and the gear wheel 28 is thereby brought into engagement with the drive pinion 23 of the spool 13. The rotation of the cable drum 29 brought about by the further movement of the piston 20 is converted via the gear wheel 28 into a rotation of the drive pinion 23 and thus into a rotation of the spool 13 in the belt take-up direction: The belt is tensioned.

The two gas generators 17 are triggered simultaneously so that, as a result of the like construction of the drive trains, the spool 13 is brought into engagement at its two axial ends with the respective gear wheels 28 in synchronized manner. At the same time, as a result of the drive pinion 23 being loaded by the pivotal levers 55 from above, it is ensured that the spool 13 is moved downwardly via the drive pinion 23 which carries the blocking gears 53 and is thus moved out of engagement with the mating teeth 52 of the frame 51, should the spool 13 be located in its blocked position when the gas generator 17 are triggered.

The pivotal levers 55 are connected to a non-illustrated resetting device which ensures that after belt tensioning has taken place the gear wheels 28 again move out of engagement with the drive pinion 23. The drive arrangement of the pretensioner in accordance with the invention thus releases the spool 13 again, which can thus enter without disturbance into the blocked position when, after belt tensioning has taken place, a tensile force is exerted on the belt and transferred to the spool 13, whereby the spool 13 is lifted and moved so that its blocking gears 53 enter into blocking engagement with the mating teeth 52 of the frame 51.

The belt in the region of the spool 13 and also the movement of the spool 13 which can be achieved by means of the pretensioner from the blocked position into the released position extend with at least a substantial component parallel to one another so that two oppositely directed torques can be exerted on the spool 13 via the belt on the one hand and via the pretensioner on the other hand, in order to ensure that the spool 13 is in the released position during the belt tensioning and can if necessary be moved into the released position and that the spool 13 can be moved by means of the belt into the blocked position.

Expressed simply, the pretensioner in accordance with the invention is designed and arranged such that it and the belt act to a certain degree opposite to one another and can move the spool 13 in opposite directions, the spool 13 being capable of being moved in translation as a result of its floating mounting.

Of a load limiting device in accordance with the invention and associated with the spool 13, Fig. 1a only shows two load limiting sections 81 spaced apart along the spool axis; these load limiting section 81 will be described in more detail in the following.

As the Figs. 1b and 1c show, the load limiting sections 81 in accordance with the invention each include the blocking gear 53 and also a spool wheel 57 which is rotationally fixedly mounted on the through-going drive pinion 23 and which is thus rotationally fixedly connected to the spool reel 14 via the drive pinion 23. The blocking gear 53 and the spool wheel 57 are plugged into one another in the axial direction to form a compact load limiting package. In distinction to the spool wheels 57 the blocking gears 53 do not have any internal teeth which cooperate with the drive pinion 23 and they are thus freely rotatably arranged on the drive pinion 23 when considered on their own.

The blocking gears 53 provided with the blocking teeth are consequently not directly directed to the through-going drive pinion 23 but rather via the spool wheel 57 which is rotationally fixedly coupled to the drive pinion 23.

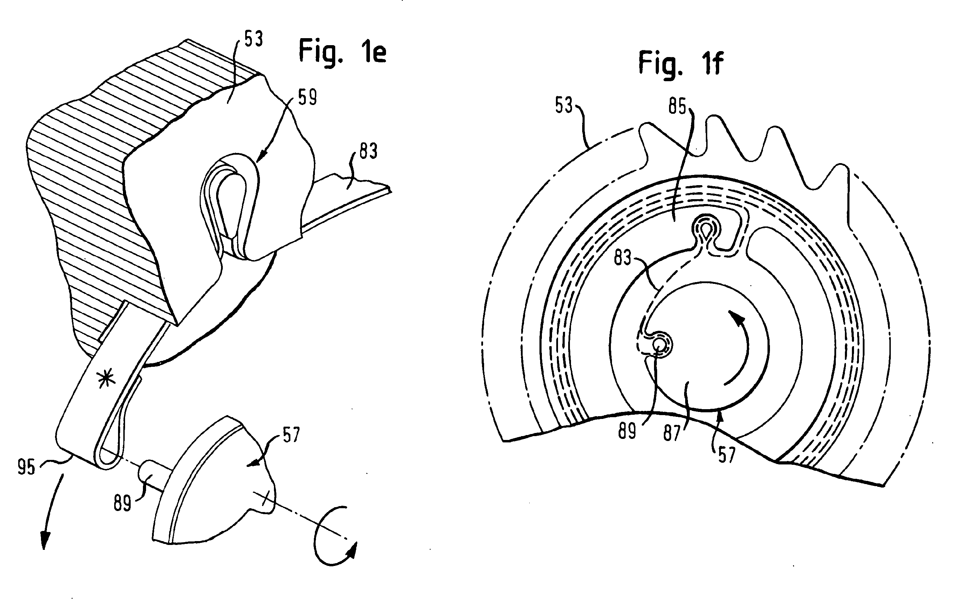

The connection between the blocking gear 53 and the spool wheel 57 takes place via a material strip 83 which is shown in Figs. 1e and 1f and which, in the initial state, is wound onto a drum section 85 of the blocking gear 53 and is firmly connected to the spool wheel 57 at a free end. The connection to the spool wheel 57 takes place via an axially projecting drive pin 89 of the spool wheel 57 which engages into a loop 95 formed at the free end of the material strip 83.

The material strip 83 is guided through a labyrinth 59 formed at the blocking gear 53 and the labyrinth can basically be shaped as desired.

When a tension is acting in the safety belt with the blocking gears 53 standing in blocking engagement with the frame 51, with the tension attempting to rotate the spool reel 14, and thus the spool wheels 57 which are rotationally fixedly coupled to the spool reel 14 via the drive pinion 23 in the belt let-out direction, the material strip 83 is in each case drawn through the labyrinth 59 in the two load limiting sections 81. In this way not only do friction forces acting between the material strip 83 and the blocking gear 53, in particular between the regions forming the labyrinth 59 act against rotation of the spool wheels 57 and thus of the spool reel 14 but rather deformation work must also be continuously exerted on the material strip 83 because the labyrinth 59 forces the moved material strip to undergo a plurality of changes of direction and thus the material strip must be permanently bent.

As can be seen from Fig. 1f in particular, the bending strip 83 is unwound from the drum section 85 of the blocking gear 53 when the load limiting function is acting and is simultaneously wound onto the drum section 87 of the spool gear wheel 57. Since the spool wheel 57 and the blocking gear 53 are plugged into one another in order to form the compact load limiting package the two drum sections 85, 87 are arranged concentric to one another with the drum section 85 of the blocking gear 53 surrounding the drum section 87 of the spool wheel 57 which has a smaller diameter.

The load limiting device in accordance with the invention offers diverse possibilities for matching the load limiting effect intentionally to the respective requirements.

The labyrinth or profile 59 through which the bending strip 83 is drawn while performing deformation work can fundamentally be given any desired shape. Furthermore, the load limiting effect can be set by changing the dimensions of the bending strip 83, in particular the strip width and the strip thickness and through the choice of different strip materials. The friction forces which are active between the blocking gear 53 and the material strip 83 can in particular be influenced by changing the surface nature of the material strip 83 and/or of the regions of the blocking gear 53 forming the labyrinth 59. Thus, special surface coatings can for example be provided.

The deformation work to be performed on the bending strip 83 can be preset by intentional material weakening, for example in the form of punched holes or other removal of material. Furthermore, it is possible to simultaneously pull a plurality of material strips 83 lying over one another through a profile or labyrinth 59 so that by changing the number of material strips 83 the load limiting effect can likewise be set.

All the above-named possibilities of adjustment can in addition be combined with one another.

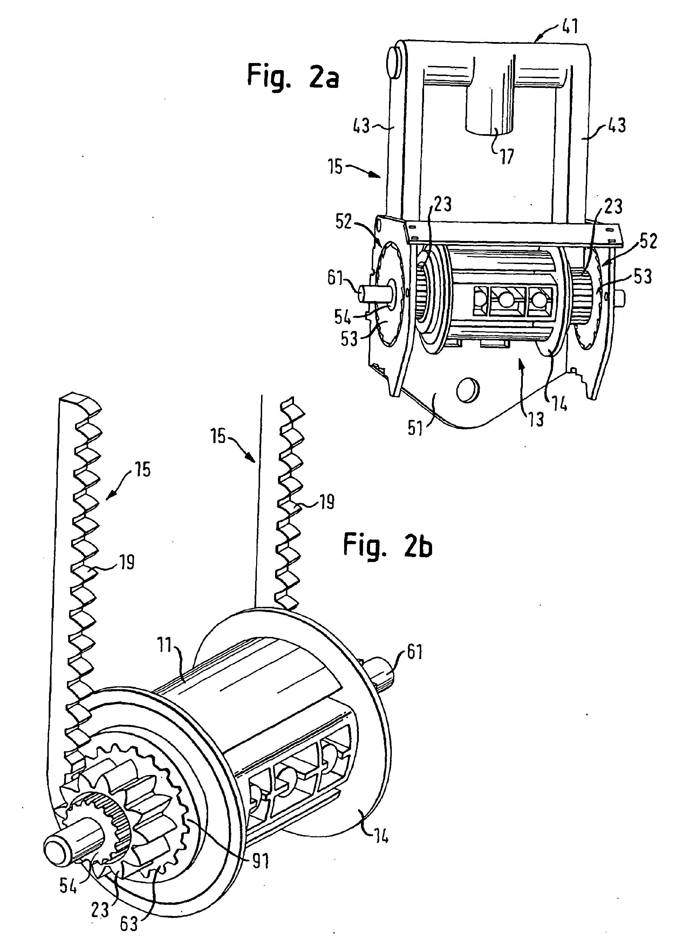

In the second embodiment of the safety apparatus of the invention in accordance with Figs. 2a - 2e no cable arrangement is provided for the pretensioner 15. On the contrary pistons formed as racks cooperate in each case directly with a drive pinion 23 of the spool 13. Since, in accordance with the invention, a different load limiting device is also used in this embodiment, namely a torsion bar 61, the spool layout is also distinguished form that of the first embodiment. This will now be discussed in more detail in the following.

The racks 19 (Figs. 2a and 2b) which serve as pistons and have a rectangular cross-section are each arranged in a cylinder section 43 with a correspondingly shaped internal cross-section. The two cylinder sections 43 are components of a closed essentially U-shaped cylinder system 41 in which moreover a gas generator 17 serving as a common drive source is arranged. The piston and cylinder system is arranged outside of a non-illustrated housing.

After triggering of the gas generator 17 the two racks 19 are loaded in the same manner and move downwardly as a result of the symmetrical construction of the drive arrangement. In this way the racks 19 enter into engagement with the drive pinions 23 which are rotationally fixedly coupled to the spool reel 14 via toothed connecting rings 63. If necessary the spool 13 is hereby first moved downwardly as a whole and thus out of engagement with the mating teeth 52 of the frame 51, i.e. is moved out of the blocked position into the released position before the spool reel 14 is turned in the belt take-up direction. In this the torsion bar 61 is moved via the coupling gear wheel 65 by the spool reel 14 because the blocking gears 53 which are rotationally fixed connected to the torsion bar 61 are out of engagement with the mating teeth 52 of the frame 51.

A non-illustrated resetting device ensures that after a belt tensioning has taken place the racks 19 move out of engagement with the drive pinions 23 of the spool 13 again so that the pretensioner does not impair the remaining functionality of the safety apparatus.

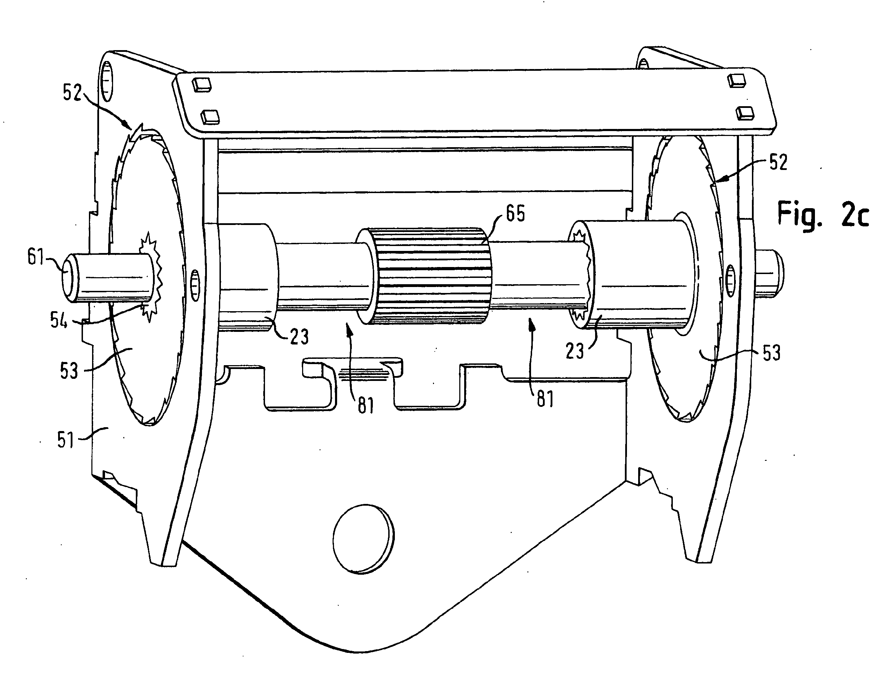

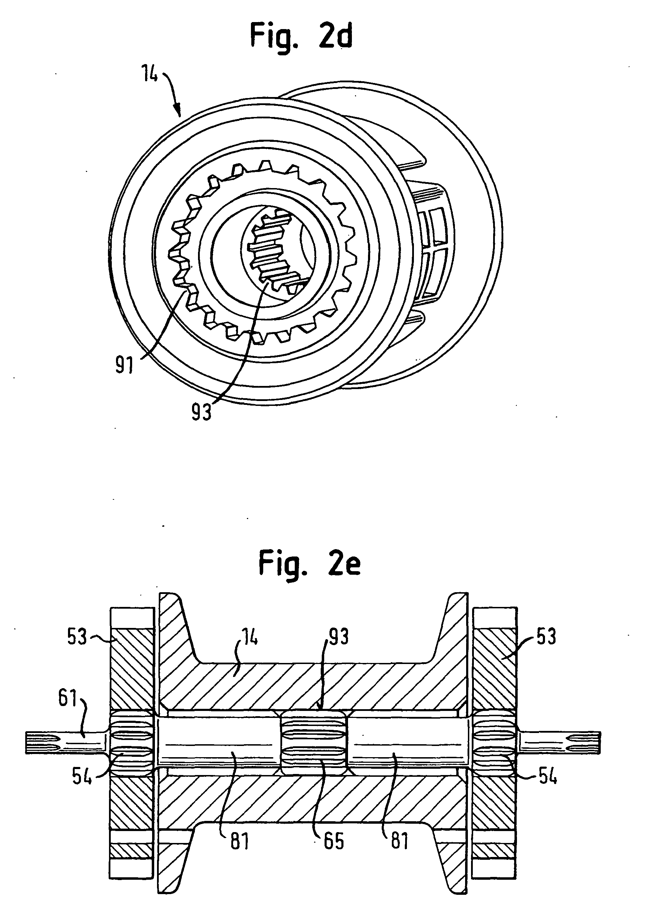

As shown in Fig. 2c the torsion bar 61 is provided with a centrally arranged coupling gear wheel 65 by which the spool reel 14 having corresponding mating teeth 93 (Fig. 2d) is permanently rotationally fixed coupled to the torsion bar 61. Fig. 2d shows teeth 91 for the toothed connection rings 63 which are respectively formed at the axial end region of the spool reel 14 and by which the spool reel 14 is rotationally fixedly coupled to the drive pinions 23 of the pretensioner 15.

The torsion bar 61 is in turn permanently rotationally fixedly coupled to the blocking gears 53 via the pinions 54 sitting at the axial end regions. Consequently a permanent connection exists between the spool reel 14 and the blocking gears 53 via two axially spaced apart load limiting sections 81 (Fig. 2c) formed by the torsion bar 61. When the spool 13 is in the blocked position, i.e. when the blocking gears 53 are in blocking engagement with the mating teeth 52 of the frame 51, these torsional regions 81 of the torsion bar 61 prevent, a rotation of the spool reel 14 in the belt let-out direction as long as a belt tension preset by the design of the torsion bar 61 is not exceeded.

As soon as the belt tension caused by vehicle occupant falling into the belt as a result of inertia in an accident situation exceeds the predetermined value the spool reel 14 can rotate in the belt let-out direction by twisting of the torsional regions 81 of the torsion bar 61.

Fig. 2e shows, simply for the purpose of illustration, the arrangement of the spool reel 14 on the torsion bar 61, not in all details but simply in a representation corresponding with respect to the basic principle of the embodiment shown in Figs. 2a - 2d. The spool reel 14 is exclusively connected to the torsion bar 61 and indeed via its internal toothed arrangement 93 to the coupling gear wheel 65 of the torsion bar 61. The torsion bar 61 is in turn connected axially outside of the spool reel 14 to the blocking gears 53 via the pinions 54. Consequently, a connection exists between the spool reel 14 and the blocking gears 53 via the two torsional regions 81 of the torsion bar 61. This connection is rotationally fixed until a predetermined belt tension is reached and leads, on exceeding this belt tension, to a synchronized torsion of the two load limiting sections 81 relative to the coupling wheel 65 and the pinions 54 of the torsion bar 61.

The symmetrical layout of the load limiting device of the invention can be particularly readily seen from Fig. 2e which leads, in comparison to customary arrangements, to a halving of the loading which has to be born by each of the two torsion regions 81, whereby the torsion bar 61 can be made more slender than in customary arrangements.

In the two above described embodiments of the invention the load limiting device of the invention and the pretensioner 15 cooperate with the spool reel 14 independently of one another. A rotation of the spool reel in the belt take-up direction in each case brought about by the pretensioner 15 admittedly signifies a rotation also of the blocking gears 53 as a result of the permanent coupling via the load limiting sections 81. The pretensioner 15 is however designed in such a way that the pretensioning function is only possible when the spool 13 is in the released position in that the blocking gears 53 are moved out of engagement with the frame 51 at the start of the pretensioning procedure. Since the belt tensions which act during the pretensioning process are substantially smaller than the forces which initiate the onset of the load limiting function, the load limiting sections 81 represent a "hard" rotationally fixed coupling between the spool reel 14 and the blocking gears 53 for the pretensioning function. The pretensioner 15 is also formed in such a way that it is located out of engagement with the respective drive pinion 23 after pretensioning has taken place or is moved out of engagement so that the load limiting function is not impaired by the pretensioner 15.

### Reference numeral list

- 11: safety belt
- 13: spool
- 14: spool reel
- 15: pretensioner
- 17: drive source, gas generator
- 19: rack or piston for direct spool driving
- 20: piston
- 23: drive pinion
- 27: cable drum for radial or tangential engagement
- 28: gear wheel
- 29: gear wheel of the cable drum
- 35: cable
- 41: cylinder
- 43: cylinder section
- 51: frame
- 52: mating teeth
- 53: blocking portion, blocking gear
- 54: pinion for blocking gear
- 55: pivotal lever
- 57: spool wheel
- 59: labyrinth
- 61: torsion bar
- 63: toothed connection ring
- 65: coupling gear wheel
- 81: load limiting section
- 83: material section, bending strip
- 85: drum section of the blocking gear
- 87: drum section of the spool wheel
- 89: driver
- 91: toothed arrangement
- 93: toothed arrangement
- 95: loop

## Claims

1. Safety apparatus, in particular for motor vehicles with
- a safety belt (11),
- a spool (13) winding up and unwinding the belt (11), the spool being rotatable in a belt let-out direction for unwinding the belt (11) and being rotatable in a direction opposite to the belt let-out direction for winding up the belt (11), the spool (13) being movable based on the so-called ("floating spool" principle) between a blocked position and a released position, in the blocked position a rotation of the spool in the belt let-out direction being not possible and in the released position the spool being rotatable in both directions , **characterized by**
- a load limiting device which, in the blocked position of the spool (13), permits a defined rotation of the spool (13),
wherein the load limiting device includes two load limiting sections (81) spaced apart along the spool axis via which a spool reel (14) carrying the belt winding is in each case coupled to a blocking portion (53).

2. Safety apparatus in accordance with claim 1,
**characterized in that**
the spool reel (14) can be blocked exclusively via the load limiting sections (81).

3. Safety apparatus in accordance with claim 1 or claim 2,
**characterized in that**
the spool reel (14) is permanently coupled to the load limiting sections (81).

4. Safety apparatus in accordance with any one of the preceding claims,
**characterized in that**
the load limiting sections (81) are each permanently coupled to the blocking portion (53).

5. Safety apparatus in accordance with any one of the preceding claims,
**characterized in that**
the spool (13) is at least symmetrically formed with regard to the load limiting function with respect to a plane of symmetry extending perpendicular to the spool axis.

6. Safety apparatus in accordance with any one of the preceding claims,
**characterized in that**
the load limiting sections (81) are each axially coupled outside of the spool reel (14) to the blocking portion (53).

7. Safety apparatus in accordance with any one of the preceding claims,
**characterized in that**
the blocking portion is formed as a gear wheel (53) which preferably has an external toothed arrangement which only blocks in the belt let-out direction.

8. Safety apparatus in accordance with one of the preceding claims,
**characterized in that**
the load limiting sections (81) each include at least one material section (83) which, in the blocked position, is movable by means of the spool reel (14) relative to the blocking portion (53).

9. Safety apparatus in accordance with claim 8,
**characterized in that**
the material section (83) is movable around the spool axis.

10. Safety apparatus in accordance with claim 8 or 9,
**characterized in that**
the material section (83) is of strip-like design.

11. Safety apparatus in accordance with any one of the claims 8 to 10,
**characterized in that**
a profile or labyrinth (59) is provided which imposes at least one change in direction on the material section (83) moved by means of the spool reel (14).

12. Safety apparatus in accordance with claim 11,
**characterized in that**
the profile or labyrinth (59) is formed at the blocking portion (53).

13. Safety apparatus in accordance with any one of the claims 8 to 12,
**characterized in that**
the material section (83) can be withdrawn from the blocking portion (53) by means of the spool reel (14).

14. Safety apparatus in accordance with any one of the claims 8 to 13,
**characterized in that**
the material section (83) can be simultaneously unwound from the blocking portion (53) and wound onto the spool reel (14) or onto a spool wheel (57) rotationally fixedly coupled to the spool reel (14).

15. Safety apparatus in accordance with claim 14,
**characterized in that**
the drum sections (85, 87) of the blocking portion (53) and of the spool reel (14) or spool wheel (57) which serve for the unwinding and winding up of the material section (83) are arranged concentric to one another.

16. Safety apparatus in accordance with any one of the claims 8 to 15,
**characterized in that**
the blocking portion (53) and the spool reel (14) or the spool wheel (57) are plugged into one another in the axial direction.

17. Safety apparatus in accordance with any one of the preceding claims,
**characterized in that**
the load limiting device includes at least one torsion bar (61) which is respectively coupled at axially spaced apart blocking positions with the blocking portions (53) and with the spool reel (14) between the blocking positions.

18. Safety apparatus in accordance with claim 17,
**characterized in that**
the torsion bar (61) extends fully through the spool reel (14).

19. Safety apparatus in accordance with claim 17 or claim 18,
**characterized in that**
the torsion bar (61) has a coupling gear wheel (65) for the spool reel (14).

20. Safety apparatus in accordance with any one of the preceding claims,
**characterized in that**
a pretensioner (15) is provided with which the spool (13) can be driven in the winding up direction.

21. Safety apparatus in accordance with claim 20,
**characterized in that**
the pretensioner (15) and the load limiting device cooperate with the spool (13) independently of one another.

## Patentansprüche

1. Sicherheitseinrichtung, insbesondere für Kraftfahrzeuge, mit
- einem Sicherheitsgurt (11),
- einer Spule (13), die den Gurt (11) abwickelt und aufwickelt, wobei die Spule in einer Gurtausgaberichtung zum Abwickeln des Gurts (11) drehbar ist und in einer Richtung entgegen der Gurtausgaberichtung zum Aufwickeln des Gurts (11) drehbar ist, wobei die Spule (13) auf der Basis des sogenannten "floating spool"-Prinzips zwischen einer Blockierstellung und einer Freigabestellung bewegbar ist, wobei in der Blockierstellung eine Rotation der Spule in der Gurtausgaberichtung nicht möglich ist und in der Freigabestellung die Spule in beiden Richtungen drehbar ist,
**gekennzeichnet durch**
- eine Lastbegrenzungseinrichtung, die in der Blockierstellung der Spule (13) eine begrenzte Rotation der Spule (13) zulässt, wobei die Lastbegrenzungseinrichtung zwei längs der Spulenachse beabstandete Lastbegrenzungsabschnitte (81) umfasst, über die ein die Gurtwicklung tragender Spulenkörper (14) jeweils mit einem Blockierabschnitt (53) gekoppelt ist.

2. Sicherheitseinrichtung nach Anspruch 1,
**dadurch gekennzeichnet,**
**dass** der Spulenkörper (14) ausschließlich über die Lastbegrenzungsabschnitte (81) blockierbar ist.

3. Sicherheitseinrichtung nach Anspruch 1 oder 2,
**dadurch gekennzeichnet,**
**dass** der Spulenkörper (14) permanent mit den Lastbegrenzungsabschnitten (81) gekoppelt ist.

4. Sicherheitseinrichtung nach einem der vorhergehenden Ansprüche,
**dadurch gekennzeichnet,**
**dass** die Lastbegrenzungsabschnitte (81) jeweils permanent mit dem Blockierabschnitt (53) gekoppelt sind.

5. Sicherheitseinrichtung nach einem der vorhergehenden Ansprüche,
**dadurch gekennzeichnet,**
**dass** die Spule (13) zumindest hinsichtlich der Lastbegrenzungsfunktion symmetrisch bezüglich einer senkrecht zur Spulenachse verlaufenden Symmetrieebene ausgebildet ist.

6. Sicherheitseinrichtung nach einem der vorhergehenden Ansprüche,
**dadurch gekennzeichnet,**
**dass** die Lastbegrenzungsabschnitte (81) jeweils axial außerhalb des Spulenkörpers (14) mit dem Blockierabschnitt (53) gekoppelt sind.

7. Sicherheitseinrichtung nach einem der vorhergehenden Ansprüche,
**dadurch gekennzeichnet,**
**dass** der Blockierabschnitt als Zahnrad (53) ausgebildet ist, das vorzugsweise eine lediglich in Gurtausgaberichtung sperrende Außenverzahnung aufweist.

8. Sicherheitseinrichtung nach einem der vorhergehenden Ansprüche,
**dadurch gekennzeichnet,**
**dass** die Lastbegrenzungsabschnitte (81) jeweils wenigstens einen Materialabschnitt (83) umfassen, der in der Blockierstellung mittels des Spulenkörpers (14) relativ zum Blockierabschnitt (53) bewegbar ist.

9. Sicherheitseinrichtung nach Anspruch 8,
**dadurch gekennzeichnet,**
**dass** der Materialabschnitt (83) um die Spulenachse herum bewegbar ist.

10. Sicherheitseinrichtung nach Anspruch 8 oder 9,
**dadurch gekennzeichnet,**
**dass** der Materialabschnitt (83) streifenförmig ausgebildet ist.

11. Sicherheitseinrichtung nach einem der Ansprüche 8 bis 10,
**dadurch gekennzeichnet,**
**dass** ein dem mittels des Spulenkörpers (14) bewegten Materialabschnitt (83) wenigstens eine Richtungsänderung aufzwingendes Profil oder Labyrinth (59) vorgesehen ist.

12. Sicherheitseinrichtung nach Anspruch 11,
**dadurch gekennzeichnet,**
**dass** das Profil oder Labyrinth (59) am Blockierabschnitt (53) ausgebildet ist.

13. Sicherheitseinrichtung nach einem der Ansprüche 8 bis 12,
**dadurch gekennzeichnet,**
**dass** der Materialabschnitt (83) mittels des Spulenkörpers (14) vom Blockierabschnitt (53) abziehbar ist.

14. Sicherheitseinrichtung nach einem der Ansprüche 8 bis 13,
**dadurch gekennzeichnet,**
**dass** der Materialabschnitt (83) gleichzeitig vom Blockierabschnitt (53) abwickelbar und auf den Spulenkörper (14) oder ein drehfest mit dem Spulenkörper (14) gekoppeltes Spulenrad (57) aufwickelbar ist.

15. Sicherheitseinrichtung nach Anspruch 14,
**dadurch gekennzeichnet,**
**dass** zum Abwickeln bzw. Aufwickeln des Materialabschnitts (83) dienende Trommelabschnitte (85, 87) des Blockierabschnitts (53) und des Spulenkörpers (14) bzw. Spulenrades (57) konzentrisch zueinander angeordnet sind.

16. Sicherheitseinrichtung nach einem der Ansprüche 8 bis 15,
**dadurch gekennzeichnet,**
**dass** der Blockierabschnitt (53) und der Spulenkörper (14) bzw. das
Spulenrad (57) in axialer Richtung ineinander gesteckt sind.

17. Sicherheitseinrichtung nach einem der vorhergehenden Ansprüche,
**dadurch gekennzeichnet,**
**dass** die Lastbegrenzungseinrichtung wenigstens einen Torsionsstab (61) umfasst, der an axial beabstandeten Blockierstellen jeweils mit den Blockierabschnitten (53) und zwischen den Blockierstellen mit dem Spulenkörper (14) gekoppelt ist.

18. Sicherheitseinrichtung nach Anspruch 17,
**dadurch gekennzeichnet,**
**dass** der Torsionsstab (61) sich vollständig durch den Spulenkörper (14) hindurch erstreckt.

19. Sicherheitseinrichtung nach Anspruch 17 oder 18,
**dadurch gekennzeichnet,**
**dass** der Torsionsstab (61) ein Kopplungszahnrad (65) für den Spulenkörper (14) aufweist.

20. Sicherheitseinrichtung nach einem der vorhergehenden Ansprüche,
**dadurch gekennzeichnet,**
**dass** eine Vorspanneinrichtung (15) vorgesehen ist, mit der die Spule (13) in Aufwickelrichtung antreibbar ist.

21. Sicherheitseinrichtung nach Anspruch 20,
**dadurch gekennzeichnet,**
**dass** die Vorspanneinrichtung (15) und die Lastbegrenzungseinrichtung unabhängig voneinander mit der Spule (13) zusammenwirken.

## Revendications

1. Dispositif de sécurité, en particulier pour véhicules à moteur, comprenant :
- une ceinture de sécurité (11),
- une bobine (13) pour enrouler et dérouler la ceinture (11), la bobine étant en rotation dans une direction de sortie de ceinture pour dérouler la ceinture (11) et étant en rotation dans une direction opposée à la direction de sortie de ceinture pour enrouler la ceinture (11), la bobine (13) étant mobile en se basant sur le principe dit à "bobine flottante" entre une position bloquée et une position relâchée, telles que dans la position bloquée une rotation de la bobine dans la direction de sortie de ceinture n'est pas possible et que dans la position relâchée la bobine est capable de tourner dans les deux directions, **caractérisé par** :
- un dispositif de limitation de charge qui, dans la position bloquée de la bobine (13), permet une rotation définie de la bobine (13),
ledit dispositif de limitation de charge incluant deux sections de limitation de charge (81) espacées le long de l'axe de la bobine via lequel un rouleau de bobine (14) qui porte l'enroulement de ceinture est couplé dans chaque cas à une portion de blocage (53).

2. Dispositif de sécurité selon la revendication 1, **caractérisé en ce que** le rouleau de bobine (14) peut être bloqué exclusivement via les sections de limitation de charge (81).

3. Dispositif de sécurité selon la revendication 1 ou 2, **caractérisé en ce que** le rouleau de bobine (14) est couplé en permanence aux sections de limitation de charge (81).

4. Dispositif de sécurité selon l'une quelconque des revendications précédentes, **caractérisé en ce que** les sections de limitation de charge (81) sont couplées chacune de façon permanente à la portion de blocage (53).

5. Dispositif de sécurité selon l'une quelconque des revendications précédentes, **caractérisé en ce que** la bobine (13) est formée au moins symétriquement à l'égard de la fonction de limitation de charge par rapport à un plan de symétrie qui s'étend perpendiculairement à l'axe de bobine.

6. Dispositif de sécurité selon l'une quelconque des revendications précédentes, **caractérisé en ce que** les sections de limitation de charge (81) sont chacune couplées axialement à l'extérieur du rouleau de bobine (14) à la portion de blocage (53).

7. Dispositif de sécurité selon l'une quelconque des revendications précédentes, **caractérisé en ce que** la portion de blocage est formée comme une roue dentée (53) qui possède de préférence un agencement denté externe qui est bloqué uniquement dans la direction de sortie de ceinture.

8. Dispositif de sécurité selon l'une quelconque des revendications précédentes, **caractérisé en ce que** les sections de limitation de charge (81) incluent chacune au moins une section de matière (83) qui, dans la position bloquée, est mobile au moyen du rouleau de bobine (14) par rapport à la portion de blocage (53).

9. Dispositif de sécurité selon la revendication 8, **caractérisé en ce que** la section de matière (83) est mobile autour de l'axe de bobine.

10. Dispositif de sécurité selon la revendication chiffre 8 ou 9, **caractérisé en ce que** la section de matière (83) a une conception analogue à un ruban.

11. Dispositif de sécurité selon l'une quelconque des revendications 8 à 10, **caractérisé en ce qu'**il est prévu un profil ou une chicane (59) qui impose au moins un changement de direction à la section de matière (83) déplacée au moyen du rouleau de bobine (14).

12. Dispositif de sécurité selon la revendication 11, **caractérisé en ce que** le profil ou la chicane (59) est formé(e) au niveau de la portion de blocage (53).

13. Dispositif de sécurité selon l'une quelconque des revendications 8 à 12, **caractérisé en ce que** la section de matière (83) peut être extraite de la portion de blocage (53) au moyen du rouleau de bobine (14).

14. Dispositif de sécurité selon l'une quelconque des revendications 8 à 13, **caractérisé en ce que** la section de matière (83) peut être simultanément déroulée depuis la portion de blocage (53) et enroulée sur le rouleau de bobine (14) ou sur une roue de bobine (54) couplée de manière fixe en rotation sur le rouleau de bobine (14).

15. Dispositif de sécurité selon la revendication 14, **caractérisé en ce que** les sections de tambour (85, 87) de la portion de blocage (53) et du rouleau de bobine (14) ou de la roue de bobine (87) qui servent au déroulement et à l'enroulement de la section de matière (83) sont agencées concentriques les unes par rapport aux autres.

16. Dispositif de sécurité selon l'une quelconque des revendications 8 à 15, **caractérisé en ce que** la portion de blocage (53) et le rouleau de bobine (14) ou la roue de bobine (57) sont emboîtés les uns dans les autres dans la direction axiale.

17. Dispositif de sécurité selon l'une quelconque des revendications précédentes, **caractérisé en ce que** le dispositif de limitation de charge inclut au moins une barre de torsion (61) qui est respectivement couplée, à des positions de blocage axialement espacées, avec les portions de blocage (53) et avec le rouleau de bobine (14) entre les positions de blocage.

18. Dispositif de sécurité selon la revendication 17, **caractérisé en ce que** la barre de torsion (61) s'étend complètement à travers le rouleau de bobine (14).

19. Dispositif de sécurité selon la revendication 17 ou 18, **caractérisé en ce que** la barre de torsion (61) comprend une roue dentée d'accouplement (65) pour le rouleau de bobine (14).

20. Dispositif de sécurité selon l'une quelconque des revendications précédentes, **caractérisé en ce qu'**il est prévu un prétensionneur (15) avec lequel la bobine (13) peut être entraînée dans la direction d'enroulement.

21. Dispositif de sécurité selon la revendication 20, **caractérisé en ce que** le prétensionneur (15) et le dispositif de limitation de charge coopèrent avec la bobine (13) indépendamment l'un de l'autre.
